# FASCICULE DE BREVET EUROPEEN

(11) **EP 1 464 472 B1**
(45) Date de publication et mention de la délivrance du brevet: **23.04.2008**
(21) Numéro de dépôt: 04015938.6
(22) Date de dépôt: 25.01.2001
(51) Int. Cl.: B29D 30/16, B29D 30/08

(54) **Appareil à bras oscillant, pour la fabrication d'un renfort de pneumatique à partir d'un seul fil**
Schwingarmvorrichtung zur Herstellung einer Reifenverstärkungsstruktur mit einem einzigen Reifenkord
Swing arm apparatus for manufacturing a tyre reinforcing structure using a single thread

(30) Priorité: 01.02.2000 FR 0001393
(43) Date de publication de la demande: 06.10.2004
(62) Demande divisionnaire de: 01101614.4
(73) Titulaire: Manufacture Française des Pneumatiques Michelin, 63040 Clermont-Ferrand Cedex 9 (FR)
(72) Inventeur: Mayet, Jean-Claude, 63000 Clermont-Ferrand (FR)
(74) Mandataire: Bauvir, Jacques

(56) Documents cités:
- EP-A- 0 890 428
- EP-A- 0 962 304
- EP-B- 1 122 055
- AT-B- 390 762
- GB-A- 848 962
- US-A- 1 259 997
- US-A- 3 082 140

## Description

La présente invention concerne la fabrication des pneumatiques. Plus précisément, elle se rapporte à la mise en place de fils pour constituer un renforcement du pneumatique. Plus particulièrement, elle propose des moyens aptes à fabriquer un tel renforcement sur une forme proche ou identique de la forme de la cavité interne du pneumatique, c'est à dire une forme sensiblement toroïdale, supportant l'ébauche de pneumatique pendant sa fabrication.

Dans ce domaine technique, on connaît déjà des procédés et appareils qui permettent d'intégrer la fabrication des renforcements de pneumatique à l'assemblage du pneumatique lui-même. Cela signifie que, plutôt que de recourir à des produits semi-finis, comme des nappes de renforcement, on réalise un ou des renforcements in situ, au moment où l'on fabrique le pneumatique, et à partir d'une seule bobine de fil. On connaît par exemple l'appareil décrit dans la demande EP 0 962 304 correspondant au préambule de la revendication 1. Parmi ces procédés et appareils, la solution décrite dans la demande de brevet EP 0 580 055 est tout particulièrement adaptée pour la réalisation de renforcements de carcasse sur un noyau rigide dont la surface extérieure correspond sensiblement à la forme de la cavité interne du pneumatique final. On y voit un appareillage dans lequel le fil, destiné à constituer un renforcement de carcasse, est posé en arceaux contigus sur un noyau rigide, par un oeilleton fixé sur une chaîne montée sur des poulies de façon à entourer le noyau en formant une sorte d'enfourchement. L'oeilleton effectue un mouvement de va-et-vient autour du noyau de façon à poser, progressivement et de façon contiguë, un arceau à chaque aller et un arceau à chaque retour, avec intervention de presseurs appropriés pour appliquer les extrémités desdits arceaux au fur et à mesure sur le noyau rigide, pré-revêtu de caoutchouc cru.

L'objectif de la présente invention est de proposer des variantes d'appareillage pour poser un fil de renforcement sur un noyau sensiblement de la même façon.

L'invention propose un appareil de fabrication d'un renforcement pour pneumatique selon la revendication 1, ledit appareil étant destiné à fabriquer un renforcement constitué à partir d'un fil délivré en continu et à la demande par un distributeur approprié, ledit appareil étant destiné à être utilisé en coopération avec une forme sensiblement toroïdale sur lequel on construit progressivement ledit renforcement en déposant des arceaux dudit fil selon une trajectoire souhaitée pour ledit fil à la surface de ladite forme,
ledit appareil comprenant :
- un organe de guidage dans lequel le fil peut coulisser librement,
- des moyens de déplacement dudit organe de guidage selon un mouvement cyclique, en va-et-vient, pour amener en cycles successifs ledit organe de guidage au voisinage de chacune des extrémités souhaitées pour le fil dans ladite trajectoire,
- des presseurs proches de chaque extrémité de ladite trajectoire, pour appliquer le fil sur la forme auxdites extrémités,
caractérisé en ce que :
- le moyen de déplacement comporte au moins un bras de base, ledit bras de base comportant un centre de rotation et une tête de transport, et des moyens de commande pour conférer audit bras de base un mouvement d'oscillation autour dudit centre de rotation, l'appareil étant agencé pour que la tête de transport dudit bras de base transporte directement ou indirectement l'organe de guidage d'une extrémité à l'autre de ladite trajectoire,
- l'axe géométrique dudit centre de rotation est, en position de travail, entièrement à l'extérieur de la forme.

Des formes avantageuses de l'invention font l'objet des revendications dépendantes.

Le lecteur est invité à consulter la demande de brevet EP 0 580 055 précitée car la présente invention reprend non seulement le procédé qui y est décrit, mais aussi dans une large mesure les presseurs intervenant pour permettre la formation d'une boucle et pour appliquer ladite boucle contre le noyau. Pour rappel, les presseurs comprennent essentiellement chacun une fourche et un marteau. A quelques détails près, l'exemple de réalisation des presseurs qui y est décrit pourrait être repris tel quel, même si l'on propose ci-dessous une nouvelle forme pour lesdits presseurs.

C'est concernant les organes de dépose du fil, et plus précisément l'animation dudit organe de guidage dans lequel le fil peut coulisser librement (à savoir l'oeilleton), que l'invention apporte les principales différences. Autrement dit, le ou les systèmes à bras oscillants décrits ci-dessous sont conçus pour pouvoir prendre la place du système à chaîne décrit dans le brevet précité.

Avant d'aborder en détails la description de ces nouveaux moyens d'animation de l'organe de guidage du fil, rappelons quelques points utiles.

Notons tout d'abord que, comme dans le brevet cité, le terme "fil" doit bien entendu être compris dans un sens tout à fait général, englobant un monofilament, un multifilament, un assemblage comme par exemple un câble ou un retors, ou un petit nombre de câbles ou retors groupés, et ceci quelle que soit la nature du matériau, et que le "fil" soit pré revêtu de caoutchouc ou non. Dans le présent mémoire, on emploie le terme "arceau" pour désigner un tronçon de fil allant d'un point singulier à un autre dans l'armature de renforcement. L'ensemble de ces arceaux disposés sur tout le pourtour du pneumatique forme le renforcement proprement dit. Un arceau au sens défini ici peut faire partie d'une carcasse, ou d'un renfort de sommet, ou de tout autre type de renfort. Ces arceaux peuvent être individualisés par une coupe du fil en cours de pose, ou tous reliés entre eux dans le renforcement final, par exemple par des boucles.

Fondamentalement, l'invention traite de la dépose en continu d'un fil de renforcement, dans une configuration aussi proche que possible de la configuration dans le produit final. Le fil étant délivré à la demande par un distributeur approprié comportant par exemple une bobine de fil et le cas échéant un dispositif de contrôle de la tension du fil extrait de la bobine, l'appareil de fabrication d'un renfort à partir d'un seul fil coopère avec une forme (noyau rigide ou une membrane armée) sur laquelle on fabrique le pneumatique. Il importe peu que le renforcement soit, pour être complet, fabriqué en plusieurs passes successives des organes de pose décrits, avec coupe du fil ou non entre deux passes.

Lorsque l'on définit des positions, des directions ou des sens avec les mots "radialement, axialement, circonférentiellement", ou lorsque l'on parle de rayons, on prend pour repère le noyau sur lequel on fabrique le pneumatique, ou le pneumatique par lui-même, ce qui revient au même. L'axe géométrique de référence est l'axe de rotation de la forme.

De même, comme déjà signalé dans le brevet précité, les organes de pose du fil décrits ici permettent aussi de réaliser un renforcement, par exemple un renforcement de carcasse, dans lequel le pas de pose du fil est variable. On entend par "pas de pose" la distance résultant de la somme de l'écart entre deux fils adjacents et le diamètre du fil. Il est bien connu que pour un renforcement de carcasse, l'écart entre fils varie selon le rayon auquel on le mesure. Il ne s'agit pas de cette variation dont il est question ici, mais bien d'un pas variable à un rayon donné. Il suffit pour cela de, sans changer la cadence de travail de l'organe de guidage, faire varier selon toute loi appropriée la vitesse de rotation de la forme. On obtient ainsi un pneumatique dont les fils de renforcement de carcasse, par exemple pour une carcasse radiale, sont disposés selon un pas présentant une variation contrôlée pour une position radiale donnée.

Différents modes de réalisation de l'invention peuvent être envisagés. Dans la suite, on décrit trois principaux modes de réalisation. Le premier mode de réalisation utilise une cascade de trois bras oscillants fonctionnels. On donne en outre des variantes possibles pour ce premier mode de réalisation. On utilisera de préférence une cascade à trois bras oscillants fonctionnels pour la dépose d'arceaux de carcasse allant d'un bourrelet à l'autre bourrelet du pneumatique. Le deuxième mode de réalisation utilise une cascade de deux bras oscillants fonctionnels. On donne en outre une variante de réalisation pour ce deuxième mode de réalisation. On utilisera par exemple une cascade à deux bras oscillants fonctionnels pour la dépose d'arceaux de carcasse allant d'un bourrelet à une épaule du pneumatique. Le troisième mode de réalisation utilise un seul bras oscillant fonctionnel, ce qui suffit pour les déposes les plus simples à réaliser.

Lorsque l'on utilise « n » bras oscillants fonctionnels agencés en cascade (n > 1), on conviendra d'appeler « n^{ième} bras » le bras oscillant fonctionnel sur lequel l'organe de guidage du fil est directement fixé, le bras de base étant toujours le « premier bras » oscillant. Les bras oscillant sont agencés en cascade de sorte que, en toute généralité, la tête de transport du bras oscillant « p » (avec p < n) transporte le centre de rotation du bras oscillant « p+1 ». C'est pourquoi on a précisé ci-dessus que la tête de transport porte l'organe de guidage du fil directement, ou bien seulement « indirectement » (c'est à dire par l'intermédiaire d'un ou de plusieurs autres bras oscillant fonctionnels). Dans tous les exemples décrits, l'axe géométrique du centre de rotation du premier bras oscillant est, en position de travail, entièrement à l'extérieur de la forme qu'il ne rencontre jamais, c'est à dire pas même par ses prolongements.

L'appareil fait décrire à l'organe de guidage du fil un mouvement sensiblement compris dans un plan -le plan de mouvement- perpendiculairement à l'axe géométrique de rotation du bras de base. Sous un autre aspect de l'appareil selon l'invention, le bras de base, ou selon les variantes chacun des bras oscillant utilisés est d'allure plane, longiligne, et le bras de base oscille dans ce plan de mouvement, ou l'ensemble des bras oscillants se meuvent dans des plans parallèles et voisins, l'un d'eux étant très proche de ce plan de mouvement, voire pouvant être confondu avec ce plan de mouvement, selon la nature de l'organe de guidage utilisé.

La suite de la description permet de bien faire comprendre tous les aspects de l'invention, en s'appuyant sur les figures suivantes :
La figure 1 est une perspective schématique montrant un premier mode de réalisation d'un appareil selon l'invention ;
La figure 2 est un détail d'un presseur de cet appareil ;
La figure 3 illustre une première variante du premier mode de réalisation ;
La figure 4 représente plus en détail une phase de fonctionnement de l'appareil selon le premier mode de réalisation ;
La figure 5 illustre un détail du premier mode de réalisation non visible à la figure 1;
La figure 6 illustre une deuxième variante du premier mode de réalisation ;
La figure 7 représente les stades successifs du fonctionnement de la deuxième variante du premier mode de réalisation ;
La figure 8 est une coupe radiale montrant un deuxième mode de réalisation d'un appareil selon l'invention ;
La figure 9 illustre une variante du deuxième mode de réalisation ;
La figure 10 est une vue en élévation (coupe dans le plan défini à la figure 1 par l'axe MM et l'axe géométrique de l'arbre 3D, aussi appelé « plan médian ») du mécanisme de commande utilisée dans le premier mode de réalisation illustré à la figure 1 ;
La figure 11 est une coupe selon AA à la figure 10 ;
La figure 12 est une perspective schématique montrant un troisième mode de réalisation d'un appareil selon l'invention.

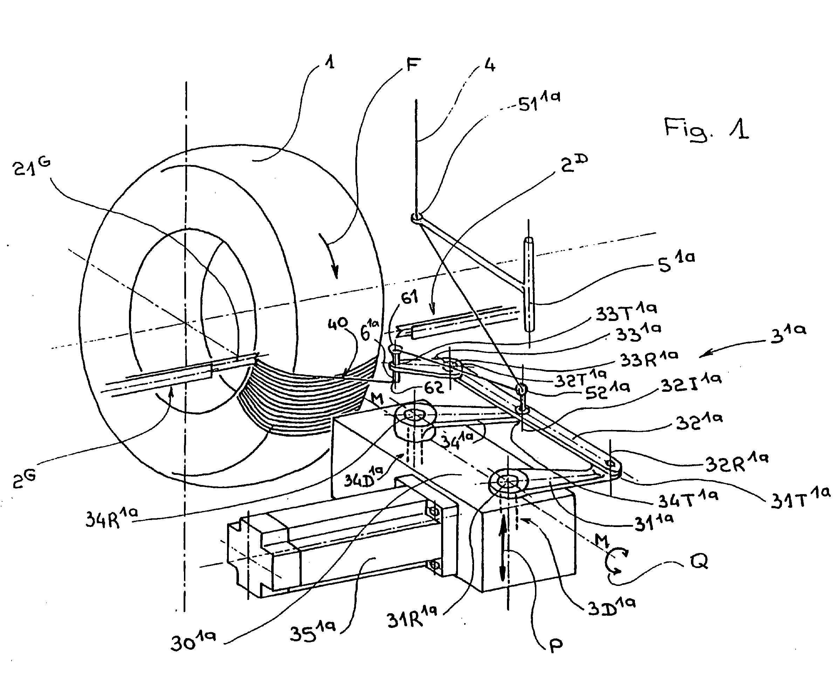

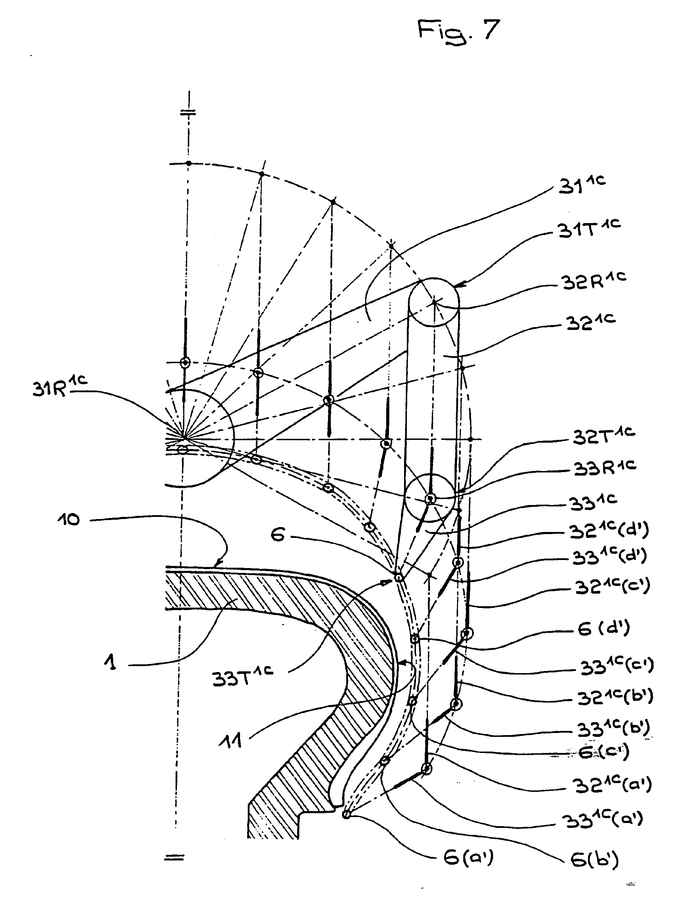

A la figure 1 (ainsi que d'ailleurs pour tous les exemples décrits, sans toutefois que ceci soit limitatif), on voit que la forme est un noyau 1 (rigide et démontable) définissant la géométrie de la surface intérieure du pneumatique. Celui-ci est revêtu de caoutchouc 10 (voir figure 7), par exemple d'une couche de gomme d'étanchéité à base de caoutchouc butyl, et d'une couche de gomme assurant l'enrobage des fils de carcasse. Le caoutchouc 10 recouvrant le noyau 1 permet de retenir un fil 4 sur le noyau 1 au fur et à mesure de sa dépose, par un effet de collage. Bien entendu, le noyau 1 est entraîné en rotation par tout dispositif convenable, non représenté.

Les organes de pose proprement dits comportent essentiellement un système à bras oscillants 3^{1a} d'une part, et des dispositifs presseurs 2^{G} et 2^{D} d'autre part. En ce qui concerne les références aux figures, la convention utilisée est de désigner des organes similaires par la même référence principale, par exemple « 3 » pour le système à bras oscillants, et de marquer l'appartenance spécifique à un mode de réalisation ou à une variante par un nombre placé en exposant, par exemple « ^{1a} » pour le premier mode de réalisation (utilisant une cascade de trois bras oscillants), dans sa variante « a ». Une référence sans marque spécifique renvoie à un organe toujours le même dans les différentes variantes ou doit être comprise comme désignant indifféremment toutes les variantes de tous les modes de réalisation.

Dans le premier mode de réalisation montré à la figure 1, le système à bras oscillants 3^{1a} comporte trois bras oscillants fonctionnels 31^{1a}, 32^{1a}, 33^{1a} agencés en cascade et un bras auxiliaire 34^{1a}. Cet agencement à trois bras oscillants fonctionnels permet aisément de déplacer l'organe de guidage d'un bourrelet à l'autre, et donc d'obtenir, en conjonction avec les dispositifs presseurs 2^{G} et 2^{D}, une action de l'appareil d'un bourrelet à l'autre. Un oeilleton 6 constitue dans tous les exemples décrits ici la matérialisation de l'organe de guidage du fil 4 (sans que ceci soit limitatif). L'oeilleton est toujours monté sur le dernier bras oscillant. Avant d'aborder les détails, indiquons simplement que le système à bras oscillants 3 remplit la fonction remplie par le système à chaîne dans la demande de brevet EP 0 580 055 précitée, et les dispositifs presseurs 2^{G} et 2^{D} sont positionnés de façon appropriée pour jouer le rôle décrit dans la demande de brevet EP 0 580 055 précitée.

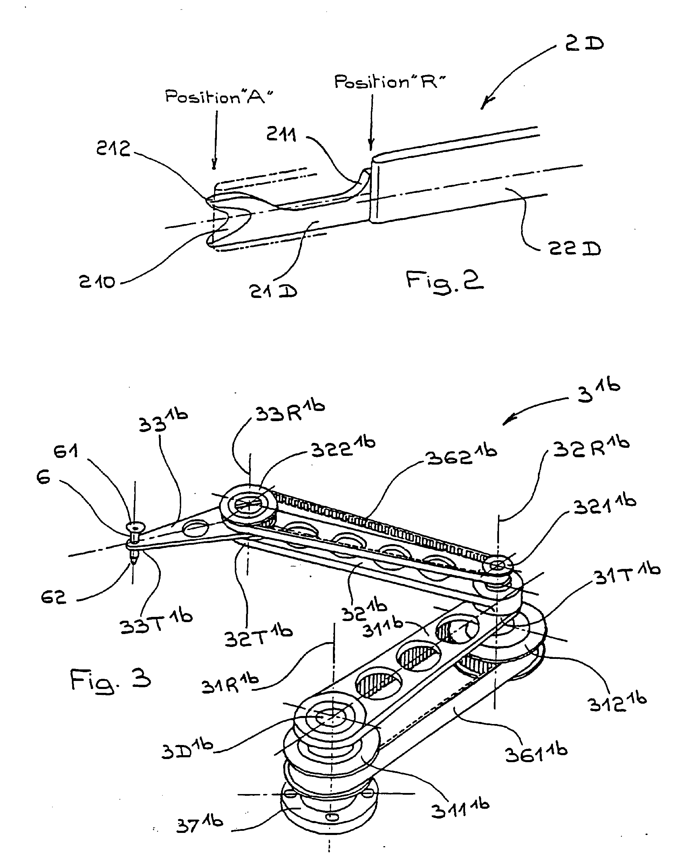

Le système à bras oscillants 3^{1a} est monté sur une platine 30^{1a}, et fait décrire à l'oeilleton 6^{1a} un mouvement survolant le noyau 1, et même le contournant dans beaucoup d'exemples de réalisation. Dans tous les cas de figure, le système à bras oscillants 3 fait parcourir à l'oeilleton 6 un mouvement dans un plan. L'oeilleton 6 est évasé : il forme un entonnoir avec une grande ouverture 61 du côté de l'arrivée du fil 4, et un plus petit orifice 62 du côté de la sortie du fil 4 (voir aussi la figure 3). C'est le petit orifice 62 qui décrit un mouvement dans ledit plan de mouvement de l'organe de guidage. Il convient de soigner la réalisation des rebords de l'orifice 62 pour ne pas blesser le fil 4, car le brin de sortie de celui-ci se dispose généralement sensiblement dans le plan de mouvement, c'est à dire dans un plan qui est perpendiculaire à la direction de guidage imposée par l'oeilleton 6. En variante, on peut orienter l'oeilleton de façon à se rapprocher de l'orientation moyenne du fil à la sortie de l'oeilleton.

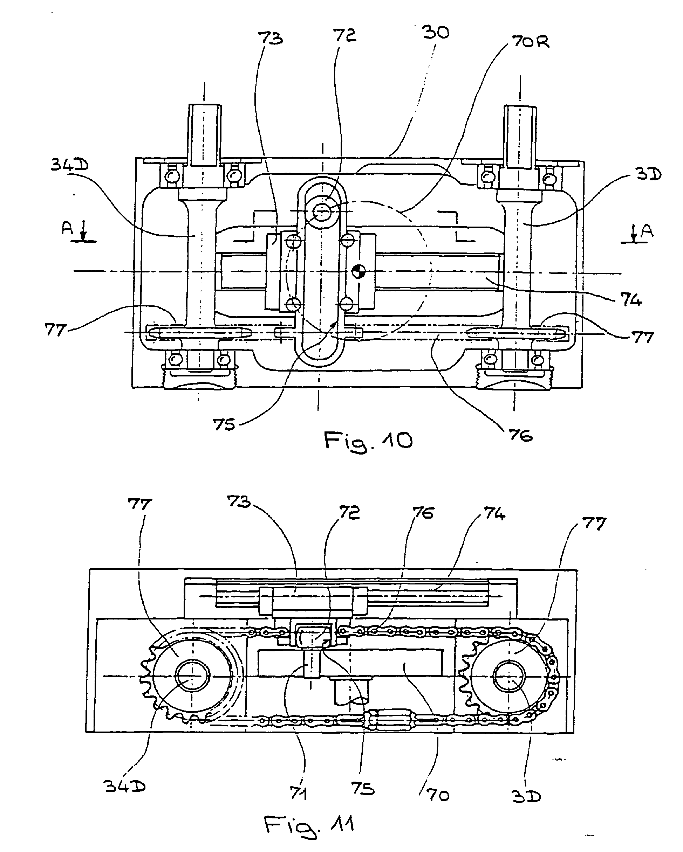

La platine 30^{1a} comporte un arbre oscillant 3D^{1a} (voir aussi 3D aux figures 10 et 11) motorisant le système à bras oscillants, l'axe géométrique dudit arbre oscillant 3D^{1a} étant situé radialement à l'extérieur du noyau 1. Autrement dit, l'axe géométrique dudit arbre oscillant 3D^{1a} est situé au delà de la surface du noyau 1, sans que son prolongement ne rencontre le noyau 1. Ledit arbre oscillant 3D^{1a} n'effectue pas de rotation continue, mais oscille dans les limites d'un arc inférieur à 360°, la valeur précise dépendant de la constitution exacte du système à bras oscillants 3 et de l'application visée.

L'ensemble du système à bras oscillants 3 lui-même est assez compact. L'ensemble des organes de pose, à savoir le système à bras oscillants 3 et les dispositifs presseurs 2, y compris le moteur et le mécanisme d'entraînement, forment un sous-ensemble pouvant facilement être présenté au noyau de façon appropriée, et pouvant être escamoté pour par exemple présenter au noyau d'autres dispositifs utilisés pour la fabrication d'un pneumatique ou pour l'évacuation du noyau vers d'autres postes de confection d'un pneumatique.

Un bras de base (ou premier bras) 31^{1a} (figure 1) est monté sur l'arbre oscillant 3D^{1a} par un centre de rotation 31R^{1a}. Le premier bras 31^{1a} comporte une tête de transport 31T^{1a} à l'extrémité opposée au centre de rotation 31R^{1a}. Un deuxième bras 32^{1a}, articulé par un centre de rotation 32R^{1a} du deuxième bras, est monté sur la tête de transport 31T^{1a} du premier bras 31^{1a}. Ce deuxième bras 32^{1a} comporte une tête de transport 32T^{1a}. Afin de commander la position relative du deuxième bras 32^{1a} par rapport au premier bras 31^{1a}, on forme dans cet exemple un parallélogramme au moyen d'un bras auxiliaire 34^{1a}, monté oscillant autour sur un arbre oscillant 34D^{1a} par son centre de rotation 34R^{1a}. Le centre de rotation 34R^{1a} est situé radialement à l'extérieur de la surface du noyau 1, et radialement entre celle-ci et le centre de rotation 31R^{1a} du premier bras 31^{1a}. Le bras auxiliaire 34^{1a} comporte une tête de transport 34T^{1a}, articulé sur le deuxième bras 32^{1a} qui comporte à cette fin un centre de rotation intermédiaire 32I^{1a} situé entre le centre de rotation 32R^{1a} et la tête de transport 32T^{1a} dudit deuxième bras 32^{1a}.

Remarquons qu'il n'est pas nécessaire que les points singuliers que sont les centres de rotation 31R^{1a}, 34R^{1a} et les têtes de transport 31T^{1a}, 34T^{1a} forment un parallélogramme. De préférence, ces points sont exactement alignés au passage de la position médiane dans le plan médian, défini par l'axe MM joignant les centres de rotation 31R^{1a}, 34R^{1a} et par l'axe géométrique de l'arbre 3D (ainsi que par l'axe géométrique de l'arbre 34D^{1a} qui est bien entendu parallèle au précédent). De la sorte, l'oeilleton 6 décrit un mouvement dont le tracé est symétrique par rapport à ce plan médian, et il atteint le voisinage de chacune des zones de bourrelet définies sur le noyau 1, dans un mouvement parfaitement symétrique, même dans sa commande. Ceci n'exclut pas bien entendu que les extrémités du mouvement de l'oeilleton ne soient pas en des points symétriques par rapport au plan médian, par exemple pour fabriquer un pneumatique dont la trajectoire des arceaux ne serait pas symétrique. Ce serait le cas pour fabriquer un pneumatique dont les diamètres au seat (terme usuel pour désigner le siège de montage) de chacun des bourrelets sont différents.

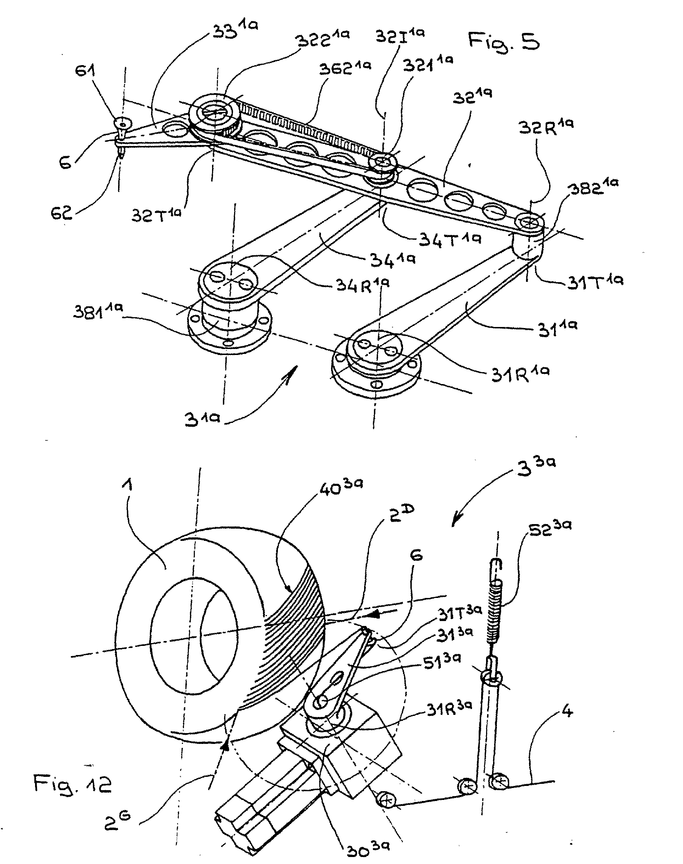

Enfin, l'appareil comporte un troisième bras 33^{1a}, articulé par son centre de rotation 33R^{1a} sur la tête de transport 32T^{1a} du deuxième bras 32^{1a}. Ce troisième bras 33^{1a} comporte une tête de transport 33T^{1a}, sur laquelle est directement monté l'oeilleton 6. Dans la suite, à l'aide de la figure 5, on décrira les moyens de commande de la position relative du troisième bras 33^{1a} par rapport au deuxième bras 32^{1a}, non représentés à la figure 1 pour ne pas surcharger le dessin. Remarquons simplement, à ce stade, que l'utilisation d'un tel troisième bras oscillant, mobile par rapport au deuxième bras oscillant, aide à approcher des bourrelets l'extrémité de transport supportant directement l'oeilleton 6, c'est à dire aide à contourner la paroi du noyau 1 en regard du centre de rotation du premier bras, pour accéder à des zones cachées par ladite paroi, en contre-dépouille par rapport à la direction d'observation radiale. Enfin, signalons que l'orientation relative du troisième bras 33^{1a} par rapport au deuxième bras 32^{1a} permet de bien visualiser le degré de liberté fonctionnel entre lesdits bras.

Un moteur 35^{1a} commande le mouvement de l'ensemble des bras 31^{1a}, 32^{1a}, 33^{1a}, 34^{1a}, de préférence par motorisation des deux arbres 3D^{1a} et 34D^{1a}, comme expliqué en détail au moyen des figures 10 et 11. Le moteur 35^{1a} entraîne en rotation un plateau 70. Un axe 71 est enchâssé dans le plateau 70, dans une position excentrée prédéterminée. L'axe 71 supporte un galet 72. Un chariot 73 se translate sur des glissières 74 aménagées sur le boîtier de la platine 30^{1a}. Le chariot 73 comporte une lumière rectiligne 75, orientée perpendiculairement à la direction de translation du chariot 73 sur les glissières 74. Une chaîne (avec tendeur) 76 est montée sur deux pignons identiques 77, et reliée par ses extrémités au chariot 73. Les pignons identiques 77 sont fixés l'un sur l'arbre 3D et l'autre sur l'arbre 34D.

En supposant que le moteur 35 imprime à l'arbre de commande 350 un mouvement de rotation à vitesse constante, le galet 72 exécute un mouvement circulaire 70R à vitesse constante. Ce faisant, le galet 72 monte et descend dans la lumière 75, et translate le chariot 73, transformant ainsi un mouvement de rotation à vitesse constante en mouvement de va-et-vient, alternatif et linéaire, dont la vitesse varie sinusoïdalement. Par l'intermédiaire de la chaîne 76 et des pignons identiques 77, ce mouvement linéaire variant alternativement est transformé sur les arbres 3D et 34D, en oscillation balayant un arc inférieur à 360°. On peut régler l'amplitude de l'oscillation en réglant le rayon auquel l'axe 71, donc le galet 72) est monté de façon excentrée sur le plateau 70. A la loi de transformation d'un mouvement ainsi créée mécaniquement, on peut bien entendu superposer n'importe quelle loi de commande particulière pour la rotation du rotor du moteur 35.

Revenons à l'explication de la figure 1. Un fil 4 est délivré par une bobine (non représentée) puis est enfilé sur un dispositif d'alimentation 5^{1a} permettant d'amener et de présenter le fil 4 correctement aux organes de pose. De préférence, le dispositif d'alimentation 5^{1a} comporte des moyens assurant le contrôle de la tension du fil 4, et le cas échéant la compensation nécessaire entre les organes de pose 3^{1a} et la bobine, du fait que le fil est appelé par lesdits organes de pose à une vitesse cycliquement variable, pouvant même être négative. Le fil 4 est enfilé dans un premier anneau 51^{1a} disposé à quelque distance du plan de mouvement, dans lequel l'oeilleton 6 exécute son mouvement cyclique. L'anneau 51^{1a} est disposé de façon médiane par rapport au noyau 1. Le fil 4 est ensuite enfilé dans un anneau 52 fixé au deuxième bras 32^{1a}.

Ce fil 4 est enfilé sur un oeilleton 6. L'oeilleton 6 décrit un mouvement de va-et-vient d'un bourrelet à l'autre, ou plus précisément d'un endroit proche d'un bourrelet, à un endroit proche de l'autre bourrelet. Le cycle de base du fonctionnement des appareils selon l'invention comporte les étapes suivantes :
- le fil étant retenu contre la forme pendant un temps suffisant, déplacer l'oeilleton (organe de guidage) dans un plan de mouvement d'oeilleton jusqu'à une première extrémité,
- appliquer le fil sur la forme à cette première extrémité et l'y maintenir au moins un temps suffisant, au moyen d'un dispositif presseur,
- répéter la première étape en sens inverse jusqu'à une deuxième extrémité,
- appliquer le fil sur la forme à cette deuxième extrémité et l'y maintenir, au moyen d'un autre dispositif presseur,
et répéter ainsi ce cycle de base jusqu'à déposer le nombre voulu d'arceaux à la surface de la forme, selon la trajectoire souhaitée pour le fil 4 à la surface de la forme, en déplaçant la forme en synchronisme avec le mouvement de l'organe de guidage.

A la figure 2, on voit plus particulièrement le presseur 2^{D} qui comporte une fourche 21^{D} et un marteau 22^{D}, tous deux mobiles entre une position reculée, en R (position éloignée du noyau 1), et une position avancée, en A. En voit en vue fantôme le marteau en position avancée. En ce qui concerne les références aux figures, la convention utilisée est de désigner chacun des organes des presseurs par une référence principale, par exemple « 21 » pour la fourche, et de marquer l'appartenance spécifique au presseur d'un côté, le côté gauche ou le côté droit à la figure 1, par respectivement la lettre « ^{G} » ou « ^{D} » placée en exposant. Une référence sans marque spécifique renvoie de façon générique indifféremment à l'un ou l'autre des presseurs ou à leurs organes.

Le lecteur est à nouveau invité à consulter la partie adéquate de la description de la demande de brevet EP 0 580 055 précitée, pour un rappel des fonctions respectives de la fourche et du marteau 22, et pour un rappel des rôles respectifs des positions dites avancée A et reculée R. A la figure 2, on voit qu'aussi bien la fourche 21 que le marteau 22 ont l'allure de lames parallèles. La fourche 21 est, par rapport au marteau, toujours disposée radialement du côté de l'axe de rotation du noyau 1. La fourche 21 a une tête 210 en « V », permettant de prendre et de centrer le fil 4. Pendant la phase de préhension, le plan formé par le « V » est disposé perpendiculairement au fil 4. Lorsque le fil 4 doit être disposé radialement, cas de la figure 1, la lame formant la fourche 21 est orientée de façon tangente à un cercle concentrique au noyau 1. La fourche 21 comporte aussi un évidemment 211 dont le rôle apparaîtra ci-dessous.

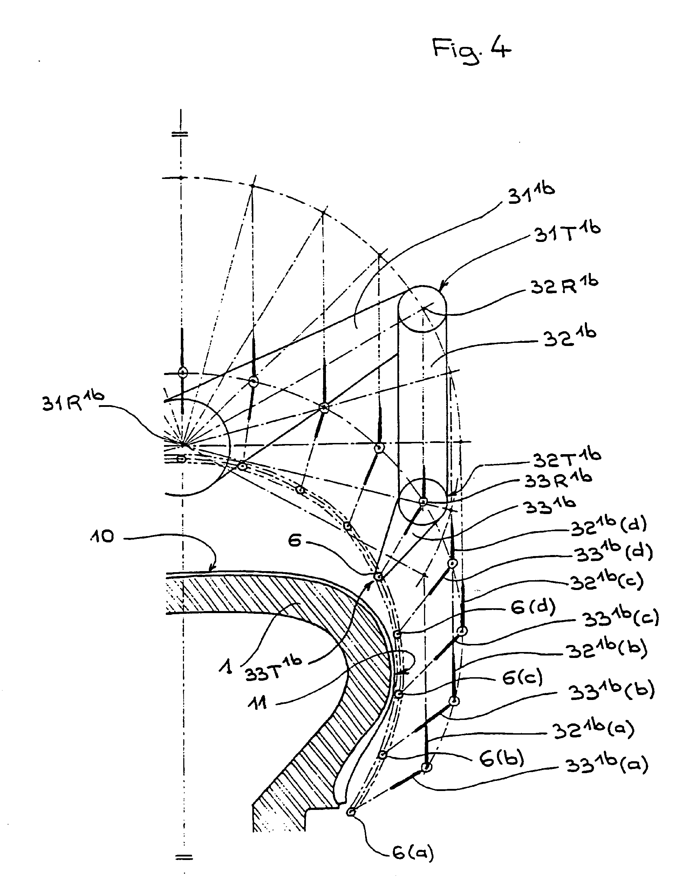

On sait que la fourche 21 est destinée à emporter le fil 4 contre le noyau 1. A cette fin, son avance vers le noyau 1 est déclenchée lorsque l'oeilleton 6 a amené le fil 4 à une extrémité du mouvement en va-et-vient, c'est à dire lorsque l'appareil est sensiblement dans la configuration de la figure 4. La fourche 21 est arrêtée lorsqu'elle a ancré le fil dans le caoutchouc revêtant le noyau 1. Ladite fourche 21 permet donc de plaquer le fil 4 avec une force suffisante pour qu'il adhère correctement à l'endroit souhaité. Revenant à la figure 1, et compte tenu du pas de pose souhaité, lui-même fonction du mouvement de rotation du noyau 1 schématisé par la flèche F, la poursuite du mouvement du système à bras oscillants 3 provoque la formation d'une boucle autour de la pointe 212, ce qui amorce la dépose d'un nouvel arceau 40 sur le noyau 1 (voir figure 1). Et le passage de l'oeilleton 6 au delà de la fourche 21 en phase de retour est permis par l'évidemment 211, bien que la fourche 21 soit plaquée contre le noyau 1 dans cette phase de la fabrication. Signalons que la taille de la boucle est fonction de la dimension de la pointe 212.

Le marteau 22 intervient après la fourche 21 et après la phase dite de retour de l'oeilleton 6. Le marteau 22 appuie sur le fil 4 à une position radiale un peu plus élevée. De préférence, il retient encore le fil 4 pendant que l'on rétracte la fourche 21. Le maintien du marteau pendant que la fourche se rétracte aide à éviter que la fourche 21 n'emporte avec elle la boucle de fil 4 qui s'est formée autour d'une de ses pointes 212, et qui même si elle est collée sur le caoutchouc, pourrait avoir tendance à rester solidaire de la fourche. L'ancrage du fil 4 dans le bourrelet s'en trouve parfaitement fiabilisé.

Bien entendu, le basculement en position avancée, et le retour en position reculée, aussi bien pour la fourche 21 que pour le marteau 22, sont commandés en synchronisme avec le système à bras oscillants 3^{1a}, par tout dispositif convenable (renvoi de mouvement de l'arbre 3D par une transmission mécanique appropriée, par exemple à courroies ou à câble ou par synchronisation électrique entre plusieurs moteurs). Dans la suite, un tel dispositif ou un dispositif équivalent est simplement schématisé par une flèche, et désigné par la référence 2, étant entendu que cela désigne en toute généralité un dispositif à deux actionneurs comme une fourche et un marteau, intervenant en séquence sur le fil 4.

A la figure 3, on voit une variante de réalisation du même premier mode, comportant un système à bras oscillants 3^{1b}, différent de ce qui est décrit ci-dessus essentiellement par les moyens de commande du mouvement du deuxième bras 32^{1b} par rapport au bras de base (ou premier bras) 31^{1b}. Dans cette variante du premier mode de réalisation, le système à bras 3^{1b} comporte encore trois bras fonctionnels 31^{1b}, 32^{1b}, 33^{1b} agencés en cascade, et lesdits moyens de commande permettent aussi, en conjonction avec des dispositifs presseurs, une action de l'appareil d'un bourrelet à l'autre. Un bras de base (ou premier bras) 31^{1b} est monté sur un arbre oscillant 3D^{1b} par un centre de rotation 31R^{1b}. Le premier bras 31^{1b} comporte une tête de transport 31T^{1b} à l'extrémité opposée au centre de rotation 31R^{1b}. Un deuxième bras 32^{1b}, articulé par un centre de rotation 32R^{1b} du deuxième bras, est monté sur la tête de transport 31T^{1b} du premier bras 31^{1b}. Ce deuxième bras 32^{1b} comporte une tête de transport 32T^{1b}. Enfin, l'appareil comporte un troisième bras 33^{1b}, articulé par son centre de rotation 33R^{1b} sur la tête de transport 32T^{1b} du deuxième bras 32^{1b}. Ce troisième bras 33^{1b} comporte une tête de transport 33T^{1b}, sur laquelle est directement monté l'oeilleton 6.

On voit une poulie menante 311^{1b} centré sur le centre de rotation 31R^{1b} dudit premier bras. La poulie menante 311^{1b} est solidaire d'un flasque 37^{1b} monté fixe sur ladite platine (non représentée à la figure 3). Une poulie menée 312^{1b} est solidaire (c'est à dire sans rotation relative possible) du deuxième bras 32^{1b}. Une courroie crantée 361^{1b} relie lesdites poulie menante et poulie menée. Les diamètres des poulie menante et poulie menée sont identiques de sorte que, pendant son mouvement, le deuxième bras 32^{1b} reste toujours parallèle à lui-même. L'homme du métier aura compris que, puisqu'il s'agit de piloter les positions précises du ou des différents bras, les poulies utilisées sont des poulies crantées. Les courroies, elles aussi crantées, travaillent sans glissement relatif par rapport aux poulies sur lesquelles elles sont montées. On peut bien entendu utiliser n'importe quel système sans glissement équivalent pour relier les bras dont il faut contrôler la position, comme par exemple une chaîne et des pignons. Dans le présent mémoire, les termes « poulie » et « courroie » englobent tous les systèmes équivalents pour contrôler sans glissement les positions relatives.

Dans cet exemple, le flasque 37^{1b} est fixe dans l'espace, mais plus généralement, il importe que sa position angulaire soit contrôlée indépendamment de la commande d'oscillation dudit premier bras. On peut par exemple introduire un degré de liberté entre la platine et le flasque 37^{1b}, et commander la position relative dudit flaque 37^{1b} par rapport à la platine, pour agir sélectivement sur la position spatiale de la poulie menante 311^{1b} afin de, par exemple, adapter le mouvement exécuté par l'oeilleton 6 à des formes de tailles différentes.

Quant aux moyens de commande de la position relative du troisième bras 33^{1b} par rapport au deuxième bras 32^{1b}, ils comportent essentiellement une poulie menante 321^{1b} centrée sur le centre de rotation 32R^{1b} dudit deuxième bras 32^{1b}, solidaire (pas de rotation relative possible) du premier bras 31^{1b}, et ils comportent une poulie menée 322^{1b} solidaire (de même, pas de rotation relative possible) dudit troisième bras 33^{1b}. Une courroie crantée 362^{1b} relie lesdites poulie menante et poulie menée. Les diamètres des poulie menante et poulie menée sont différents, leurs valeurs respectives étant calculées pour que l'extrémité de transport 33T^{1b}, pendant son mouvement, atteigne la zone du noyau 1 proche du bourrelet (voir figure 4), sans que le deuxième bras 32^{1b} ne vienne heurter le flanc 11 du noyau 1.

La figure 4 montre l'oeilleton 6 dans la position 6(a) imposée par l'appareil décrit ci-dessus, à une extrémité du mouvement de va-et-vient des bras oscillants fonctionnels 31^{1b}, 32^{1b}, 33^{1b}. La configuration correspondante prise par les deuxième et troisième bras de l'appareil est montrée en 32^{1b}(a) et 33^{1b}(b) respectivement. Différentes autres positions et configurations sont désignées par les repères (b), (c), (d).

En variante, la poulie menante 321^{1b} pourrait aussi être montée libre par rapport au premier bras 31^{1b}, et entraînée par une courroie enroulée d'une part sur une poulie solidaire de ladite poulie menante 321^{1b} et d'autre part enroulée sur une autre poulie (non représentée) concentrique à l'axe géométrique 3D^{1b} et motorisée indépendamment à la fois du mouvement du premier bras et du mouvement de la poulie 311^{1b}. Cela offre plus de latitudes pour contrôler le mouvement relatif du troisième bras par rapport au deuxième.

La figure 5 illustre une commande équivalente, montée sur le système à bras oscillants 3^{1a} de la figure 1. On voit une troisième poulie 321^{1a} centré sur le centre de rotation intermédiaire 32I^{1a} dudit deuxième bras 32^{1a}, solidaire (pas de rotation relative possible) du bras intermédiaire 34^{1a}, et une quatrième poulie 322^{1a} solidaire (de même, pas de rotation relative possible) dudit troisième bras 33^{1a}. Une courroie crantée 362^{1a} relie lesdites poulie menante et poulie menée. Les diamètres des poulie menante et poulie menée sont différents, leurs valeurs respectives étant calculées pour que l'extrémité de transport 33T^{1a}, pendant son mouvement, atteigne la zone du noyau 1 proche du bourrelet (voir figure 4), sans que le deuxième bras 32^{1a} ne vienne heurter le flanc 11 du noyau 1. La remarque précédente sur une autre possibilité de contrôle du mouvement relatif du troisième bras par rapport au deuxième vaut également pour cette variante.

Soulignons un autre détail de réalisation qui est bien visible sur la figure 5. Sur cette figure, le système à bras 3^{1a} est sensiblement dans la même configuration qu'à la figure 1. Dans cette configuration, le deuxième bras 32^{1a} est d'un côté des premier bras 31^{1a} et bras intermédiaire 34^{1a} (et d'un côté du plan médian défini par l'axe MM et par l'axe géométrique de l'arbre 3D^{1a}) et reste de ce côté pendant la partie du mouvement pendant laquelle l'oeilleton 6 survole la moitié du noyau 1 située d'un côté dudit plan médian. Au cours du mouvement depuis un côté du noyau vers l'autre côté, le deuxième bras 32^{1a} est amené à passer de l'autre du plan médian, et ce faisant de l'autre côté des premier bras 31^{1a} et bras intermédiaire 34^{1a}. Au cours du même mouvement, le bras intermédiaire 34^{1a} passe par dessus le premier bras 31^{1a}. Il convient donc que les bras soit correctement superposés pour que ce mouvement soit possible. C'est le rôle des entretoises 381^{1a} et 382^{1a}. Cette remarque est bien entendu de portée générale. Les bras oscillants articulés les uns aux autres, dans la mesure où ils exécutent un mouvement symétrique dans son tracé par rapport à un plan médian, doivent être judicieusement superposés les uns par rapport aux autres pour permettre tous les croisements de bras voulus.

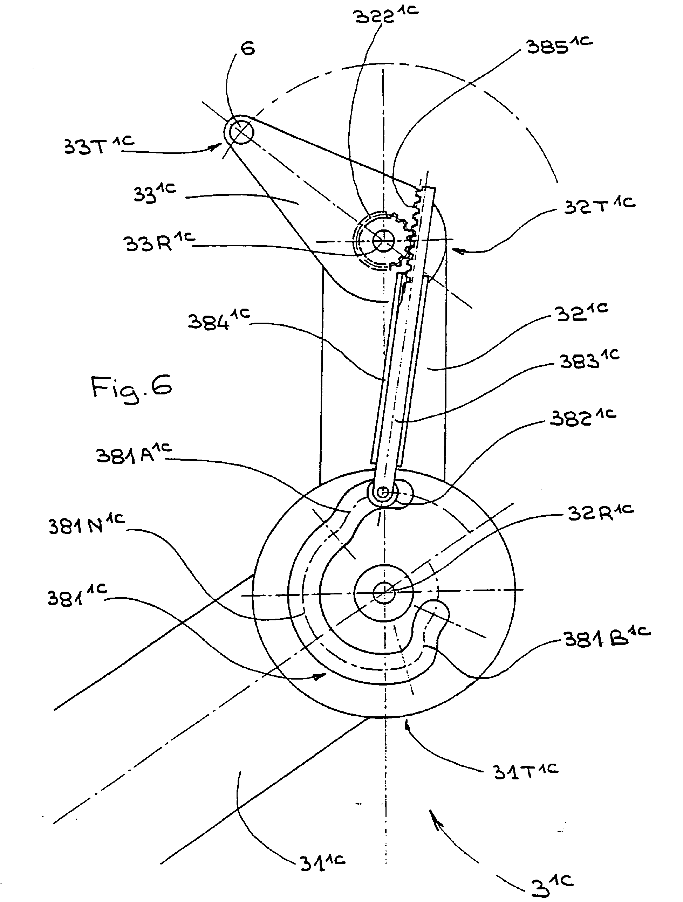

A l'aide figures 6 et 7, on explique maintenant une autre variante du premier mode de réalisation, variante concernant là encore la commande du mouvement d'un troisième bras 33^{1c}. Dans cette autre variante du premier mode de réalisation, le système à bras 3^{1c} comporte encore trois bras fonctionnels 31^{1c}, 32^{1c}, 33^{1c} agencés en cascade, et ladite commande permet aussi, en conjonction avec des dispositifs presseurs, une action de l'appareil d'un bourrelet à l'autre.

On voit un bras de base (ou premier bras) 31^{1c} et un deuxième bras 32^{1c}, la description du mouvement relatif entre le premier et le deuxième bras étant superflue car elle peut être identique à ce qui a été décrit pour le système à bras 3^{1a} ou 3^{1b}. Le premier bras 31^{1c} comporte une tête de transport 31T^{1c}. Un deuxième bras 32^{1c}, articulé par un centre de rotation 32R^{1c} du deuxième bras, est monté sur la tête de transport 31T^{1c} du premier bras 31^{1c}. Ce deuxième bras 32^{1c} comporte une tête de transport 32T^{1c}. Enfin, l'appareil comporte un troisième bras 33^{1c}, articulé par son centre de rotation 33R^{1c} sur la tête de transport 32T^{1c} du deuxième bras 32^{1c}. Ce troisième bras 33^{1c} comporte une tête de transport 33T^{1c}, sur laquelle est directement monté l'oeilleton 6. Une came 381^{1c} est usinée dans la tête de transport 31T^{1c} du premier bras 31^{1c}. La came comporte un tronçon neutre 381N^{1c} usiné à un rayon moyen constant, un tronçon de contrôle final 381A^{1c} à rayon croissant, pour commander le mouvement relatif du troisième bras 33^{1c} d'un côté du noyau, et un tronçon de contrôle final 381B^{1c} à rayon décroissant, pour commander le mouvement relatif du troisième bras 33^{1c} de l'autre côté du noyau. Une roue dentée 322^{1c} est montée sur le centre de rotation 33R^{1c} du troisième bras 33^{1c}, et est solidaire (pas de rotation relative possible) dudit troisième bras 33^{1c}. Une biellette 383^{1c} coulisse dans un guide 384^{1c} solidaire du deuxième bras 32^{1c}. La biellette 383^{1c} est ainsi guidée en coulissement par rapport au deuxième bras 32^{1c}. La biellette 383^{1c} porte d'un côté un suiveur de came 382^{1c} coopérant avec ladite came 381^{1c}. Du côté opposé au suiveur de came 382^{1c}, la biellette 383^{1c} comporte une crémaillère 385^{1c} qui est engagée sur ladite roue dentée 322^{1c}. Le profil de la came dans les tronçons de contrôle final 381A^{1c} et 381B^{1c} est choisi pour que l'oeilleton 6 monté sur l'extrémité de transport 33T^{1c} du troisième bras 33^{1c}, pendant le mouvement dudit troisième bras 33^{1c}, atteigne la zone du noyau 1 proche du bourrelet (voir position 6a de la figure 7), sans que le deuxième bras 32^{1b} ne vienne heurter le flanc 11 du noyau 1.

La figure 7 montre l'oeilleton 6 dans la position 6(a') imposée par l'appareil à came décrit ci-dessus, à une extrémité du mouvement de va-et-vient des bras oscillants fonctionnels 31^{1c}, 32^{1c}, 33^{1c}. La configuration correspondante prise par les deuxième et troisième bras de l'appareil est montrée en 32^{1c}(a') et 33^{1c}(a') respectivement. Différentes autres positions et configurations sont désignées par les repères (b'), (c'), (d'). En comparant les figures 4 et 7, on voit que si les positions notées (a) et (a') sont identiques, les positions notées (b'), (c') et (d') à la figure 7 diffèrent quelque peu des positions (b), (c) et (d) à la figure 4. On remarque la garde bien plus grande au niveau du flanc 11 préservée et permise par la commande à came.

Grâce à la commande par came, le mouvement relatif entre deuxième et troisième bras peut être ajusté aux besoins assez librement puisqu'il dépend essentiellement du profil de la came. On est ainsi libéré de la contrainte de proportionnalité au mouvement rotatif relatif entre le premier et le deuxième bras, spécifique de la commande par courroie décrite à l'aide des figures 3 et 5. On peut imposer une position relative du troisième bras par rapport au deuxième bras, de façon à notamment faire dégager rapidement l'oeilleton 6 par rapport au noyau 1. On assure ainsi une garde constamment suffisante entre le la tête de transport 33T^{1c} et le noyau 1 (voir positions 6b, 6c et 6d), tout en approchant suffisamment de la surface du noyau 1 dans la zone du bourrelet (voir position 6a). Sur la came 381^{1c}, on peut repérer que la partie 381B^{1c}, ainsi que la partie 381D^{1c} déviée dans l'autre sens, imposent des variations de position importantes, sur faible course, donc des variations de position rapides (la course étant abscisse curviligne sur la came 381^{1c}), pour faire basculer le troisième bras 33^{1c} respectivement d'un côté et de l'autre côté du deuxième bras 32^{1c}, aux extrémités opposées du mouvement de l'oeilleton 6, lorsqu'il approche de chacun des bourrelets.

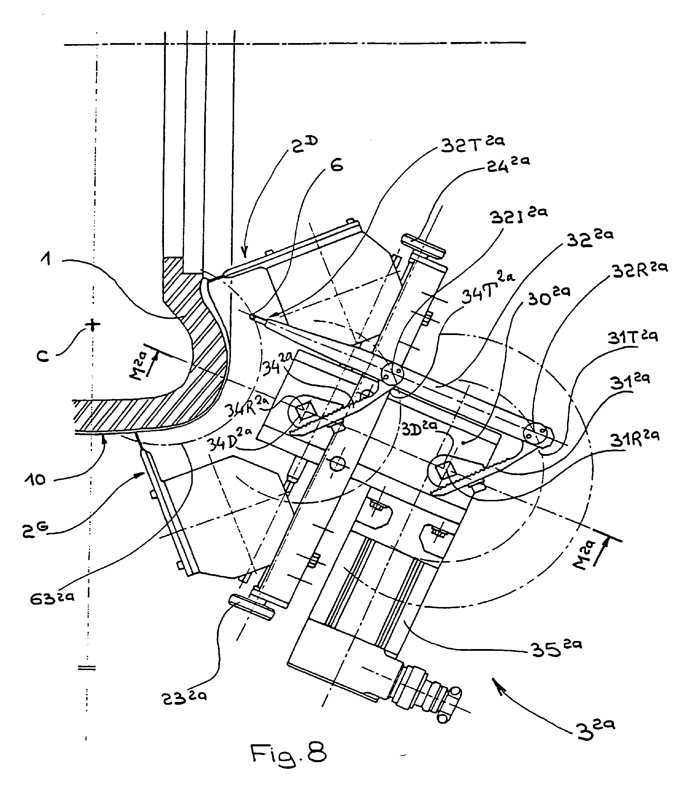

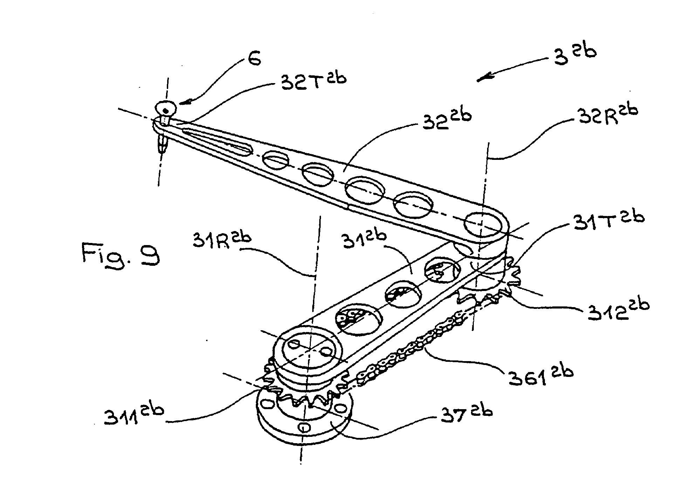

Dans un deuxième mode de réalisation, illustré aux figures 8 et 9, le système à bras oscillants 3^{2a} comporte deux bras oscillants fonctionnels 31^{2a} et 32^{2a} en cascade. Il est conçu pour une action d'un bourrelet à une épaule, par exemple pour la fabrication d'une demi-carcasse. Il est en effet connu que la carcasse d'un pneumatique radial peut ne pas être continue d'un bourrelet à l'autre, mais peut être interrompue quelque part sous la bande de roulement, le renforcement de ceinture assurant la transmission des efforts entre les demi-carcasses. Le renfort de carcasse doit être déposé entre le bourrelet et une épaule. Le système à bras oscillants 3^{2a} reprend le principe à parallélogramme du système à bras oscillants 3^{1a}, sauf que bien entendu il n'y a pas de troisième bras. Une platine 30^{2a} supporte un moteur de commande 35^{2a}. Le moteur de commande 35^{2a} actionne des arbres 3D^{2a} et 34D^{2a} dont l'axe géométrique de rotation est compris dans un plan médian M^{2a}-M^{2a}. Le moteur de commande 35^{2a} actionne aussi les dispositifs presseurs 2^{G} et 2^{D}, ceux-ci étant du même type que ceux dont la forme est décrite plus en détail à la figure 2. L'écartement des dispositifs presseurs 2^{G} et 2^{D} par rapport au plan médian M^{2a}-M^{2a} peut être réglé par les molettes 23^{2a} et 24^{2a}.

Un bras de base (ou premier bras) 31^{2a} est monté sur l'arbre oscillant 3D^{2a} par son centre de rotation 31R^{2a}. En prenant pour point de repère le centre C de la section radiale du noyau 1, le centre de rotation 34R^{2a} est situé à l'extérieur de la surface du noyau 1. Le premier bras 31^{2a} comporte une tête de transport 31T^{2a}. Un deuxième bras 32^{2a}, articulé par un centre de rotation 32R^{2a} du deuxième bras, est monté sur la tête de transport 31T^{2a} du premier bras 31^{2a}. Ce deuxième bras 32^{2a} comporte une tête de transport 32T^{2a}. Afin de commander la position relative du deuxième bras 32^{2a} par rapport au premier bras 31^{2a}, on forme dans cet exemple un parallélogramme au moyen d'un bras auxiliaire 34^{2a}, monté oscillant autour sur l'arbre oscillant 34D^{2a} par son centre de rotation 34R^{2a}. En prenant pour point de repère le centre C de la section radiale du noyau 1, le centre de rotation 34R^{2a} est situé à l'extérieur de la surface du noyau 1, entre celle-ci et le centre de rotation 31R^{2a} du premier bras 31^{2a}. Le bras auxiliaire 34^{2a} comporte une tête de transport 34T^{2a}, articulé sur le deuxième bras 32^{2a} qui comporte à cette fin un centre de rotation intermédiaire 32I^{2a} situé entre le centre de rotation 32R^{2a} et la tête de transport 32T^{2a} dudit deuxième bras 32^{2a}. La tête de transport 32T^{2a} du deuxième bras 32^{2a} supporte directement l'oeilleton 6. Le mouvement de l'oeilleton 6 est représentée par le trait d'axe 63^{2a}.

Un appareil selon ce principe, à deux bras oscillants fonctionnels, pourrait tout aussi bien être utilisé pour une action d'un bourrelet jusqu'à n'importe quel point sous la bande de roulement, y compris jusqu'à l'épaule opposée, avec un certain degré de chevauchement des demi-carcasses l'une sur l'autre.

A la figure 9 est représentée une variante comportant un système à bras oscillants 3^{2b} différent de ce qui est décrit pour le système de la figure 8 essentiellement par les moyens de commande du mouvement du deuxième bras 32^{2b} par rapport au bras de base (ou premier bras) 31^{2b}. Au lieu d'une commande par poulies et courroie crantées, cette variante comporte un pignon menant 311^{2b} centré sur le centre de rotation 31R^{2b} dudit premier bras.

On voit un bras de base (ou premier bras) 31^{2b} est monté sur un arbre oscillant par son centre de rotation 31R^{2b}. Le premier bras 31^{2b} comporte une tête de transport 31T^{2b} à l'extrémité opposée au centre de rotation 31R^{2b}. Un deuxième bras 32^{2b}, articulé par un centre de rotation 32R^{2b} du deuxième bras, est monté sur la tête de transport 31T^{2b} du premier bras 31^{2b}. Ce deuxième bras 32^{2b} comporte une tête de transport 32T^{2b} sur laquelle est directement monté l'oeilleton 6. Le pignon menant 311^{2b} est solidaire d'un flasque 37^{2b} monté fixe sur une platine (non représentée à la figure 9). Un pignon mené 312^{2b} est solidaire (c'est à dire sans rotation relative possible) du deuxième bras 32^{2b}. Une chaîne 361^{2b} relie lesdits premier et deuxième pignons. Les diamètres des premiers et deuxième pignons sont identiques de sorte que, pendant son mouvement, le deuxième bras 32^{2b} reste toujours parallèle à lui-même. Le système à bras 3^{2b} peut se substituer au système à bras 3^{2a} de la figure 8. La remarque précédente sur la possibilité de contrôler un degré de liberté entre la platine et le flasque 37^{1b}, et commander la position relative dudit flaque 37^{1b} par rapport à la platine, vaut aussi pour le flasque 37^{2b}, ainsi que pour tous les flasques semblables.

Rappelons que l'oeilleton 6, dans toutes les variantes, est animé d'un mouvement cyclique dans un plan, appelé ci-dessus « plan de mouvement d'oeilleton ». Par ailleurs, la surface pré revêtue du noyau 1 détermine la géométrie globale de la surface de dépose du fil 4 de renforcement. En outre, le noyau 1 est entraîné en rotation autour de son axe pendant que l'oeilleton 6 effectue ses va-et-vient dans le plan de mouvement d'oeilleton. Bien entendu, le mouvement du noyau 1 est en synchronisme avec le mouvement de va-et-vient de l'oeilleton. La trajectoire réelle des arceaux 40 du fil 4 est donc à la fois fonction de la position relative entre le plan de mouvement d'oeilleton et le noyau, et est fonction du mouvement relatif entre le noyau 1 et le va-et-vient de l'oeilleton 6.

Aux figures 1, 4, 7 et 8, la trajectoire de l'arceau 40 est sensiblement radiale parce qu'on y décrit la réalisation d'une carcasse (ou d'une demi-carcasse) pour un pneumatique radial, sans que bien entendu cela ne soit limitatif. Un autre exemple est donné dans un troisième mode de réalisation, illustré à la figure 12, où la trajectoire de l'arceau 40^{3a} n'est pas radiale, mais forme un angle typique des renforts de ceinture (de l'ordre de 15° à 30°).

Dans ce troisième mode de réalisation représenté à la figure 12, on voit un système à un seul bras oscillant (le bras de base) 31^{3a} fonctionnel, adapté par exemple à la réalisation de renforts dans la ceinture d'un pneumatique. Il est adapté par exemple à une action d'épaule à épaule, pour réaliser des renforcements de ceinture. Le bras de base 31^{3a} est monté sur un arbre oscillant 3D^{3a} par son centre de rotation 31R^{3a}. Le bras de base 31^{3a} comporte une tête de transport 31T^{3a} à laquelle un oeilleton 6 est directement fixé. Le plan de dépose dans lequel l'oeilleton 6 décrit son mouvement de va-et-vient forme un angle de l'ordre de 20° par rapport à un plan perpendiculaire à l'axe de rotation du noyau 1, selon les conventions usuelles pour mesurer les angles dans le domaine du pneumatique. Les dispositifs presseurs 2^{G} et 2^{D} agissent dans le même plan de dépose. Parmi les particularités visibles à la figure 12, non spécifiques de ce mode de réalisation, notons que le fil 4 est amené par le centre creux 51^{3a} de l'arbre oscillant 3D^{3a}, et qu'un système de compensation à grande capacité de rappel 52^{3a} est installé en amont.

Pour réaliser une carcasse croisée dans les flancs, on peut éloigner le plan de mouvement d'oeilleton d'une orientation purement radiale, par inclinaison du support des organes de pose (comme la platine 30) autour d'un axe parallèle à l'axe de rotation du noyau 1. On peut bien entendu combiner ce réglage avec celui appliqué au paragraphe précédant illustrant la réalisation de renforts de ceinture. On peut encore, sans rien changer aux organes de l'appareil telle que décrite, entraîner le noyau à une vitesse assez élevée, par exemple 1/8 de tour pour un va-et-vient du système à bras 3, de sorte que l'on obtient un angle de pose du fil qui est fonction du rapport entre la vitesse de la chaîne et la vitesse du noyau (alors que dans tous les exemples précédents la vitesse du noyau 1 n'agissait que sur le seul pas de pose).

La remarque suivante explique une variante supplémentaire, que l'on peut appliquer à tous les modes de réalisation décrits ici, dans toutes leurs variantes. On peut animer le support des organes de pose (comme la platine 30^{1a} - voir figure 1) d'un mouvement alternatif dans le but d'infléchir la trajectoire de pose du fil 4 sur le noyau 1. On peut par exemple animer le support des organes de pose d'un mouvement de translation alternatif (voir double flèche P à la figure 1) permettant de translater le plan de mouvement d'oeilleton selon une direction perpendiculaire au plan de mouvement. On peut aussi animer le support des organes de pose d'un mouvement d'oscillations autour d'un axe géométrique perpendiculaire à la surface de la forme, compris dans le plan de mouvement et coupant l'axe géométrique de rotation du bras de base (voir double flèche Q autour de l'axe M-M à la figure 1), permettant de faire osciller le plan de mouvement autour d'un axe parallèle audit plan de mouvement. On peut aussi animer le support des organes de pose d'un mouvement d'oscillations autour de tout axe parallèle au précédent. Il faut bien distinguer une telle conception d'un simple réglage fixe (également possible et utile dans certains cas) de l'angle que fait la platine 30^{1a} autour de l'axe MM. Touts ces modes particuliers de réalisation donnent un degré de liberté supplémentaire pour agir sur la forme exacte de la trajectoire du fil 4.

Un avantage de l'invention est que l'appareil mettant ainsi en oeuvre le procédé de base déjà connu est mécaniquement simple et léger, et que cet appareil n'impose au maximum que des réglages simples à mettre en oeuvre pour s'adapter à toutes les variantes des renforts pour pneumatique à exécuter, en couvrant la plus grande gamme de pneumatiques possible. Le système à bras oscillants présente peu de porte-à-faux, peu d'inertie et se prête bien à des cadences de fonctionnement élevées.

On peut réaliser un renfort de carcasse en plusieurs (n) passes de pose, chaque passe recouvrant tout le noyau. Les arceaux radiaux à l'intérieur d'une passe étant posés selon un pas P, la position sur le noyau 1 des arceaux 40 posés pendant n passes successives peut présenter alors un déphasage circonférentiel correspondant à P/n. L'homme de métier peut aussi entrevoir de multiples façons d'utiliser l'invention, selon l'architecture du pneumatique qu'il veut obtenir.

Signalons encore que, dans le cas de réalisation de demi-carcasses (voir figures 8 et 9), on peut réaliser simultanément chacune des demi-carcasses de part et d'autre du noyau, on prévoyant deux appareils selon l'invention en regard chacun d'un côté du noyau. Ou bien on peut réaliser chacune des demi-carcasses successivement.

Un avantage de la présente invention est qu'elle permet de contourner la forme dans de nombreux cas d'application, y compris si la trajectoire des arceaux forme un angle très éloigné de 90° (par exemple de l'ordre de 20°). Même dans ce cas, on peut encore atteindre successivement deux points de la forme pris chacun dans la zone correspondant à un bourrelet du pneumatique, sans risquer d'heurter la forme.

## Revendications

1. Appareil de fabrication d'un renforcement pour pneumatique, ledit appareil étant destiné à fabriquer un renforcement constitué à partir d'un fil (4) délivré en continu et à la demande par un distributeur approprié, ledit appareil étant destiné à être utilisé en coopération avec une forme sensiblement toroïdale sur laquelle on construit progressivement ledit renforcement en déposant des arceaux dudit fil selon une trajectoire souhaitée pour ledit fil à la surface de ladite forme, ledit appareil comprenant :
• un organe de guidage (6) dans lequel fil peut coulisser librement,
• des moyens de déplacement dudit organe de guidage selon un mouvement cyclique, en va-et-vient, pour amener en cycles successifs ledit organe de guidage au voisinage de chacune des extrémités souhaitées pour le fil dans ladite trajectoire,
• des presseurs (2) proches de chaque extrémité de ladite trajectoire, pour appliquer le fil (4) sur la forme auxdites extrémités,
• le moyen de déplacement comporte au moins un bras de base (31), ledit bras de base comportant un centre de rotation (31R) et une tête de transport (31T), et des moyens de commande pour conférer audit bras de base un mouvement d'oscillation autour dudit centre de rotation, l'appareil étant agencé pour que la tête de transport (31T) dudit bras de base transporte directement ou indirectement l'organe de guidage d'une extrémité à l'autre de ladite trajectoire,
**caractérisé en ce que** l'axe géométrique dudit centre de rotation est, en position de travail, entièrement à l'extérieur de la forme.

2. Appareil selon la revendication 1, dans lequel la tête de transport (31T) du bras de base (31) supporte directement ledit organe de guidage (6).

3. Appareil selon la revendication 1 comportant un deuxième bras (32), articulé par un centre de rotation (32R) du deuxième bras, ledit centre de rotation du deuxième bras étant monté sur ladite tête de transport (31T) dudit bras de base, ledit deuxième bras ayant une tête de transport (32T) pour transporter directement ou indirectement l'organe de guidage d'une extrémité à l'autre de ladite trajectoire, et comportant des moyens de commande de la position relative du deuxième bras par rapport audit bras de base.

4. Appareil selon la revendication 3, dans lequel lesdits moyens de commande de la position relative du deuxième bras (32) par rapport au bras de base (31) comportent essentiellement une poulie menante (311) centrée sur le centre de rotation dudit bras de base, la position angulaire de ladite poulie menante étant contrôlée indépendamment de la commande d'oscillation dudit bras de base, et comportent une poulie menée (312) solidaire dudit deuxième bras, une courroie crantée (361) reliant lesdites poulies.

5. Appareil selon la revendication 4, dans lequel ladite poulie menante (311) est fixe dans l'espace.

6. Appareil selon la revendication 1, comportant un deuxième bras oscillant (32), le centre de rotation (32R) du deuxième bras étant monté à l'extrémité de transport (31T) dudit bras de base (31), ledit deuxième bras ayant une tête de transport (32T) pour transporter directement ou indirectement l'organe de guidage d'une extrémité à l'autre de ladite trajectoire, et comportant un bras auxiliaire (34) oscillant autour d'un centre de rotation (34R), l'axe géométrique de rotation dudit centre de rotation du bras auxiliaire étant situé entièrement à l'extérieur de la surface de la forme, entre celle-ci et l'axe géométrique de rotation dudit bras de base, ledit bras auxiliaire ayant une tête de transport (34T), ledit deuxième bras ayant un centre de rotation intermédiaire (321) entre le centre de rotation (32R) du deuxième bras et la tête de transport (32T) dudit deuxième bras, ledit centre de rotation intermédiaire étant articulé sur la tête de transport (34T) dudit bras auxiliaire.

7. Appareil selon la revendication 3 ou 6, dans lequel la tête de transport (32T) du deuxième bras supporte directement ledit organe de guidage (6).

8. Appareil selon l'une des revendications 3 à 6, comportant un troisième bras oscillant (33), articulé par son centre de rotation (33R) à la tête de transport (32T) du deuxième bras, ledit troisième bras ayant une tête de transport (33T) pour transporter directement ou indirectement l'organe de guidage d'une extrémité à l'autre de ladite trajectoire, et comportant des moyens de commande de la position relative du troisième bras par rapport au deuxième bras.

9. -Appareil selon la revendication 8, dans lequel la tête de transport (33T) du troisième bras supporte directement ledit organe de guidage (6).

10. Appareil selon la revendication 8 et 4 ou 9 et 4, dans lequel lesdits moyens de commande de la position relative du troisième bras par rapport au deuxième bras comportent essentiellement une poulie menante (321) centrée sur le centre de rotation (32R) dudit deuxième bras, ladite poulie menante étant solidaire du bras de base (31), et comportent une poulie menée (322) solidaire dudit troisième bras (33) au centre de rotation de celui-ci, une courroie crantée (362) reliant lesdites poulie menante et poulie menée.

11. Appareil selon la revendication 8 et 6 ou 9 et 6, dans lequel lesdits moyens de commande de la position relative du troisième bras par rapport au deuxième bras comportent essentiellement une poulie menante (321) centrée sur le centre de rotation intermédiaire (321) dudit deuxième bras, ladite poulie menante étant solidaire du bras intermédiaire (34), et comportent une poulie menée (322) solidaire dudit troisième bras (33) au centre de rotation de celui-ci, une courroie crantée (362) reliant lesdites poulie menante et poulie menée.

12. Appareil selon la revendication 8 ou 9, dans lequel lesdits moyens de commande de la position relative du troisième bras par rapport au deuxième bras comportent essentiellement une came agencée dans la tête de transport du bras de base, une roue dentée solidaire du troisième bras, une biellette guidée en coulissement par rapport au deuxième bras, portant d'un côté un suiveur de came coopérant avec ladite came, et de l'autre une crémaillère engagée sur ladite roue dentée.

13. Appareil selon l'une des revendications 1 à 12, comportant un support des moyens de déplacement dudit organe de guidage et comportant des moyens pour animer ledit support d'un mouvement alternatif permettant d'infléchir la trajectoire de pose du fil (4) sur le noyau (1).

## Claims

1. Device for manufacturing a reinforcement for a tyre, the said device being intended to manufacture a reinforcement made from a wire (4) fed continuously and on demand by an appropriate feeder, the said device being intended to be used in cooperation with a substantially toroidal form on which the said reinforcement is progressively constructed by depositing hoops of the said wire on a required trajectory for the said wire on the surface of the said form, the said device comprising:
• a guide member (6) in which the wire may slide freely,
• means of moving the said guide member in a cyclical motion, to and fro, to bring the said guide member in successive cycles to the vicinity of each of the ends required for the wire in the said trajectory,
• pressers (2) close to each end of the said trajectory, to press the wire (4) onto the form at the said ends,
• the movement means comprises at least one basic arm (31), the said basic arm comprising a centre of rotation (31R) and a transport head (31T), and control means for conferring on the said basic arm an oscillating movement about the said centre of rotation, the device being arranged so that the transport head (31T) of the said basic arm directly or indirectly transports the guide member from one end to the other of the said trajectory,
**characterized in that** the geometric axis of the said centre of rotation is, in the working position, entirely outside the form.

2. Device according to Claim 1, in which the transport head (31T) of the basic arm (31) directly supports the said guide member (6).

3. Device according to Claim 1, comprising a second arm (32), articulated by a centre of rotation (32R) of the second arm, the said centre of rotation of the second arm being mounted on the said transport head (31T) of the said basic arm, the said second arm having a transport head (32T) to directly or indirectly transport the guide member from one end to the other of the said trajectory, and comprising means for controlling the relative position of the second arm relative to the said basic arm.

4. Device according to Claim 3, in which the said means of controlling the relative position of the second arm (32) relative to the basic arm (31) essentially comprise a drive pulley (311) centred on the centre of rotation of the said basic arm, the angular position of the said drive pulley being controlled independently of the oscillation control of the said basic arm, and comprising a driven pulley (312) fixedly attached to the said second arm, a notched belt (361) connecting the said pulleys.

5. Device according to Claim 4, in which the said drive pulley (311) is fixed in space.

6. Device according to Claim 1, comprising a second oscillating arm (32), the centre of rotation (32R) of the second arm being mounted on the transport end (31T) of the said basic arm (31), the said second arm having a transport head (32T) for directly or indirectly transporting the guide member from one end to the other of the said trajectory, and comprising an auxiliary arm (34) oscillating about a centre of rotation (34R), the geometric axis of rotation of the said centre of rotation of the auxiliary arm being situated entirely outside the surface of the form, between the latter and the geometric axis of rotation of the said basic arm, the said auxiliary arm having a transport head (34T), the said second arm having an intermediate centre of rotation (321) between the centre of rotation (32R) of the second arm and the transport head (32T) of the said second arm, the said intermediate centre of rotation being articulated on the transport head (34T) of the said auxiliary arm.

7. Device according to Claim 3 or 6, in which the transport head (32T) of the second arm directly supports the said guide member (6).

8. Device according to one of Claims 3 to 6, comprising a third oscillating arm (33), articulated by its centre of rotation (33R) on the transport head (32T) of the second arm, the said third arm having a transport head (33T) for directly or indirectly transporting the guide member from one end to the other of the said trajectory, and comprising means of controlling the relative position of the third arm relative to the second arm.

9. Device according to Claim 8, in which the transport head (33T) of the third arm directly supports the said guide member (6).

10. Device according to Claim 8 and 4 or 9 and 4, in which the said means of controlling the relative position of the third arm relative to the second arm essentially comprise a drive pulley (321) centred on the centre of rotation (32R) of the said second arm, the said drive pulley being fixedly attached to the basic arm (31), and comprising a driven pulley (322) fixedly attached to the said third arm (33) at the centre of rotation of the latter, a notched belt (362) connecting the said drive pulley and driven pulley.

11. Device according to Claim 8 and 6 or 9 and 6, in which the said means of controlling the relative position of the third arm relative to the second arm essentially comprise a drive pulley (321) centred on the intermediate centre of rotation (321) of the said second arm, the said drive pulley being fixedly attached to the intermediate arm (34), and comprising a driven pulley (322) fixedly attached to the said third arm (33) at the centre of rotation of the latter, a notched belt (362) connecting the said drive pulley and driven pulley.

12. Device according to Claim 8 or 9, in which the said means of controlling the relative position of the third arm relative to the second arm essentially comprise a cam arranged in the transport head of the basic arm, a toothed wheel fixedly attached to the third arm, a link slidingly guided relative to the second arm, supporting on one side a cam follower interacting with the said cam, and on the other a toothed rack meshed with the said toothed wheel.

13. Device according to one of Claims 1 to 12, comprising a support of the means of moving the said guide member and comprising means for operating the said support in an alternating movement making it possible to change the direction of the trajectory for depositing the wire (4) on the core (1).

## Patentansprüche

1. Gerät zur Herstellung einer Verstärkung für Luftreifen, wobei das Gerät dazu bestimmt ist, eine Verstärkung herzustellen, die von einem Draht (4), der kontinuierlich und auf Anforderung von einem geeigneten Verteiler geliefert wird, gebildet ist, wobei das Gerät dazu bestimmt ist, durch Zusammenwirken mit einer im Wesentlichen torischen Form verwendet zu werden, auf der nach und nach die Verstärkung hergestellt wird, wobei Bögen des Drahtes nach einer für den Draht gewünschten Verlaufsbahn auf der Oberfläche der Form verwirklicht werden, wobei das Gerät umfasst:
- ein Führungselement (6), in dem der Draht frei gleiten kann,
- Mittel zum Verschieben des Führungselements entlang einer zyklischen Hin- und Herbewegung, um das Führungselement in aufeinander folgenden Zyklen in die Nähe jedes der für den Draht in der Verlaufsbahn gewünschten Enden zu bringen,
- Druckvorrichtungen (2) in der Nähe jedes Endes der Verlaufsbahn, um den Draht (4) an die Form an den Enden anzulegen,
- das Verschiebemittel umfasst mindestens einen Basisarm (31), wobei der Basisarm einen Drehmittelpunkt (31R) und einen Transportkopf (31T) und Steuermittel umfasst, um dem Basisarm eine Schwenkbewegung um seinen Drehmittelpunkt zu verleihen, wobei das Gerät derart angeordnet ist, dass der Transportkopf (31T) des Basisarms direkt oder indirekt das Führungselement von einem Ende der Verlaufsbahn zum anderen transportiert,
**dadurch gekennzeichnet, dass** die Geometrieachse des Drehmittelpunkts in der Arbeitsposition zur Gänze außerhalb der Form liegt.

2. Gerät nach Anspruch 1, bei dem der Transportkopf (31T) des Basisarms (31) das Führungselement (6) direkt stützt.

3. Gerät nach Anspruch 1 mit einem zweiten Arm (32), der über einen Drehmittelpunkt (32R) des zweiten Arms angelenkt ist, wobei der Drehmittelpunkt des zweiten Arms am Transportkopf (31T) des Basisarms montiert ist, wobei der zweite Arm einen Transportkopf (32T) hat, um das Führungselement direkt oder indirekt von einem Ende der Verlaufsbahn zum anderen zu transportieren, sowie mit Mitteln zum Steuern der Position bezüglich des zweiten Arms in Bezug auf den Basisarm.

4. Gerät nach Anspruch 3, bei dem die Mittel zur Steuerung der relativen Position des zweiten Arms (32) in Bezug auf den Basisarm (31) im Wesentlichen eine antreibende Rolle (311), die auf dem Drehmittelpunkt des Basisarms zentriert ist, wobei die Winkelposition der antreibenden Rolle unabhängig von der Steuerung des Schwenkens des Basisarms kontrolliert wird, und eine angetriebene Rolle (312) umfasst, die mit dem zweiten Arm fest verbunden ist, wobei ein Zahnriemen (361) die Rollen verbindet.

5. Gerät nach Anspruch 4, bei dem die antreibende Rolle (311) im Raum feststehend ist.

6. Gerät nach Anspruch 1, umfassend einen zweiten Schwenkarm (32), wobei der Drehmittelpunkt (32R) des zweiten Arms am Transportende (31T) des Basisarms (31) montiert ist, wobei der zweite Arm einen Transportkopf (32T) hat, um das Führungselement direkt oder indirekt von einem Ende der Verlaufsbahn zum anderen zu transportieren, sowie einen Hilfsarm (34), der um einen Drehmittelpunkt (34R) schwenkt, wobei sich die geometrische Drehachse des Drehmittelpunktes des Hilfsarms zur Gänze au-ßerhalb der Oberfläche der Form, zwischen dieser und der geometrischen Drehachse des Basisarms, befindet, wobei der Hilfsarm einen Transportkopf (34T) aufweist, wobei der zweite Arm einen Zwischendrehmittelpunkt (321) zwischen dem Drehmittelpunkt (32R) des zweiten Arms und dem Transportkopf (32T) des zweiten Arms aufweist, wobei der Zwischendrehmittelpunkt auf dem Transportkopf (34T) des Hilfsarms angelenkt ist.

7. Gerät nach Anspruch 3 oder 6, bei dem der Transportkopf (32T) des zweiten Arms direkt das Führungselement (6) trägt.

8. Gerät nach einem der Ansprüche 3 bis 6, umfassend einen dritten Schwenkarm (33), der mit seinem Drehmittelpunkt (33R) am Transportkopf (32T) des zweiten Arms angelenkt ist, wobei der dritte Arm einen Transportkopf (33T) aufweist, um direkt oder indirekt das Führungselement von einem Ende der Verlaufsbahn zum anderen zu transportieren, und umfassend Mittel zur Steuerung der relativen Position des dritten Arms in Bezug auf den zweiten Arm.

9. Gerät nach Anspruch 8, bei dem der Transportkopf (33T) des dritten Arms direkt das Führungselement (6) trägt.

10. Gerät nach Anspruch 8 und 4 oder 9 und 4, bei dem die Mittel zur Steuerung der relativen Position des dritten Arms in Bezug auf den zweiten Arm im Wesentlichen eine antreibende Rolle (321), die auf dem Drehmittelpunkt (32R) des zweiten Arms zentriert ist, wobei die antreibende Rolle fest mit dem Basisarm (31) verbunden ist, und eine angetriebene Rolle (322) umfassen, die fest mit dem dritten Arm (33) im Drehmittelpunkt desselben verbunden ist, wobei ein Zahnriemen (362) die antreibende und die angetriebene Rolle verbindet.

11. Gerät nach Anspruch 8 und 6 oder 9 und 6, bei dem die Mittel zur Steuerung der relativen Position des dritten Arms in Bezug auf den zweiten Arm im Wesentlichen eine antreibende Rolle (321), die auf dem Zwischendrehmittelpunkt (321) des zweiten Arms zentriert ist, wobei die antreibende Rolle fest mit dem Zwischenarm (34) verbunden ist, und eine angetriebene Rolle (322) umfasst, die fest mit dem dritten Arm (33) im Drehmittelpunkt desselben verbunden ist, wobei ein Zahnriemen (362) die antreibende und die angetriebene Rolle verbindet.

12. Gerät nach Anspruch 8 oder 9, bei dem die Mittel zur Steuerung der relativen Position des dritten Arms in Bezug auf den zweiten Arm im Wesentlichen eine Nocke, die im Transportkopf des Basisarms angeordnet ist, ein fest mit dem dritten Arm verbundenes Zahnrad, einen in Bezug auf den zweiten Arm gleitend geführten Schwingarm, der auf einer Seite eine Nockennachführeinrichtung, die mit der Nocke zusammenwirkt, und auf der anderen Seite eine in das Zahnrad eingreifende Zahnstange trägt, umfassen.

13. Gerät nach einem der Ansprüche 1 bis 12, umfassend einen Träger für die Mittel zum Verschieben des Führungselements und Mittel, um den Träger eine Wechselbewegung ausführen zu lassen, die es ermöglicht, die Verlegebahn des Drahtes (4) auf dem Kern (1) zu biegen.
